# EUROPEAN PATENT SPECIFICATION

(11) **EP 4 032 734 B1**
(45) Date of publication and mention of the grant of the patent: **14.06.2023**
(21) Application number: 21215314.2
(22) Date of filing: 16.12.2021
(51) Int. Cl.: B60K 1/04

(54) **MOUNTING STRUCTURE FOR ELECTRIC COMPONENT**
MONTAGESTRUKTUR FÜR ELEKTRISCHE KOMPONENTEN
STRUCTURE DE MONTAGE POUR COMPOSANT ÉLECTRIQUE

(30) Priority: 20.01.2021 JP 2021006978
(43) Date of publication of application: 27.07.2022
(73) Proprietor: Suzuki Motor Corporation, Shizuoka 432-8611 (JP)
(72) Inventor: Obara, Akihiro, Hamamatsu-shi, 432-8611 (JP); Hoshino, Shinichi, Hamamatsu-shi, 432-8611 (JP); Sanada, Ayumu, Hamamatsu-shi, 432-8611 (JP)
(74) Representative: Henkel & Partner mbB

(56) References cited:
- EP-A1- 2 620 353
- WO-A1-2013/061847
- US-A1- 2020 119 321

## Description

### [Technical Field]

The present invention relates to a mounting structure for an electric component.

### [Background Art]

Conventionally, a battery box structure for a hybrid electric vehicle described in JP 2009-35126 A has been known as one that prevents a vehicle-mounted electric component from submerging.

The battery box structure for a hybrid electric vehicle is provided with a lower frame body configured to define a first housing space and mounted on a body frame and an upper frame body configured to define a second housing space and mounted on an upper surface of the lower frame body.

The battery box structure for a hybrid electric vehicle houses a first battery-related equipment group with low requirements for waterproofness in the first housing space and houses a second battery-related equipment group with high requirements for waterproofness in the second housing space to thereby prevent the second battery-related equipment group from submerging.

WO 2013/061847 A discloses a mounting structure for an electric component, i.e. a vehicle driving battery, to effectively prevent the intrusion of water into a battery case. The battery case is mounted between a floor panel of a vehicle and a seat disposed thereon and is configured from a closed-end container-shaped lower case which has an opening directed to the upper side of the vehicle, and an upper cover which is joined to the opening and covers the opening. The battery case is provided with a vehicle body-side stay for fastening and affixing the lower case to a cross member that is part of a vehicle body, and a joint surface between the lower case and the upper cover is disposed at a position higher than the vehicle body-side stay. Consequently, although the battery case itself is disposed at a lower position within the vehicle, the intrusion of the water thereinto can be prevented even if the battery case is covered with water.

### [Summary of Invention]

### [Technical Problem]

However, the conventional battery box structure for a hybrid electric vehicle does not have a structure capable of preventing the second battery-related equipment group from submerging when a water level rises up to the second housing space that houses the second battery-related equipment group, and so there is still room for improvement in preventing the second battery-related equipment group from submerging.

The present invention has been implemented focusing on the above-described problem, and an objective of the present invention is to provide a mounting structure for an electric component capable of preventing an electric component to be installed on a floor panel from submerging when the vehicle is submerged.

### [Solution to Problem]

The present invention provides a mounting structure for an electric component as defined by claim 1.

### [Advantageous Effect of Invention]

Thus, according to the above-described present invention, when the vehicle is submerged, it is possible to prevent the electric component installed on the floor panel from submerging.

### [Brief Description of Drawings]

[Figure 1] Figure 1 is a diagram illustrating a vehicle room of a vehicle equipped with a mounting structure for an electric component according to an embodiment of the present invention viewed from diagonally above left.
[Figure 2] Figure 2 is a diagram illustrating the mounting structure for an electric component according to the embodiment of the present invention viewed from above.
[Figure 3] Figure 3 is an exploded view of the mounting structure for an electric component according to the embodiment of the present invention viewed from diagonally above behind.
[Figure 4] Figure 4 is a diagram illustrating the mounting structure for an electric component according to the embodiment of the present invention viewed from above with an electric component and a cover member removed from a fixing bracket.
[Figure 5] Figure 5 is a cross-sectional view of Figure 2 viewing from a V-V direction arrow.
[Figure 6] Figure 6 is a diagram illustrating the mounting structure for an electric component according to the embodiment of the present invention, showing the cover member viewed from diagonally front below left.
[Figure 7] Figure 7 is a diagram illustrating the mounting structure for an electric component according to the embodiment of the present invention, showing the fixing bracket and the cover member viewed from diagonally front below left.
[Figure 8] Figure 8 is a cross-sectional view of Figure 2 viewing from a VIII-VIII direction arrow.

### [Description of Embodiment]

The mounting structure for an electric component according to an embodiment of the present invention includes inter alia: a fixing member provided with a placement part with a placement surface on which an electric component is mounted, the fixing member being fixed to a fixed part of an upper surface of a floor panel of a vehicle; and a cover member having a ceiling wall and a plurality of side walls extending downward from the ceiling wall, the cover member being configured to cover the fixing member and the electric component from above and from a side, in which the placement surface is located at a position higher than the floor panel and a bottom end portion of the plurality of side walls is located at a position lower than the placement surface.

In this way, the mounting structure for an electric component according to the embodiment of the present invention can prevent the electric component to be installed on the floor panel from submerging when the vehicle is submerged.

### [Embodiment]

Hereinafter, an embodiment of the mounting structure of an electric component according to the present invention will be described with reference to the accompanying drawings.

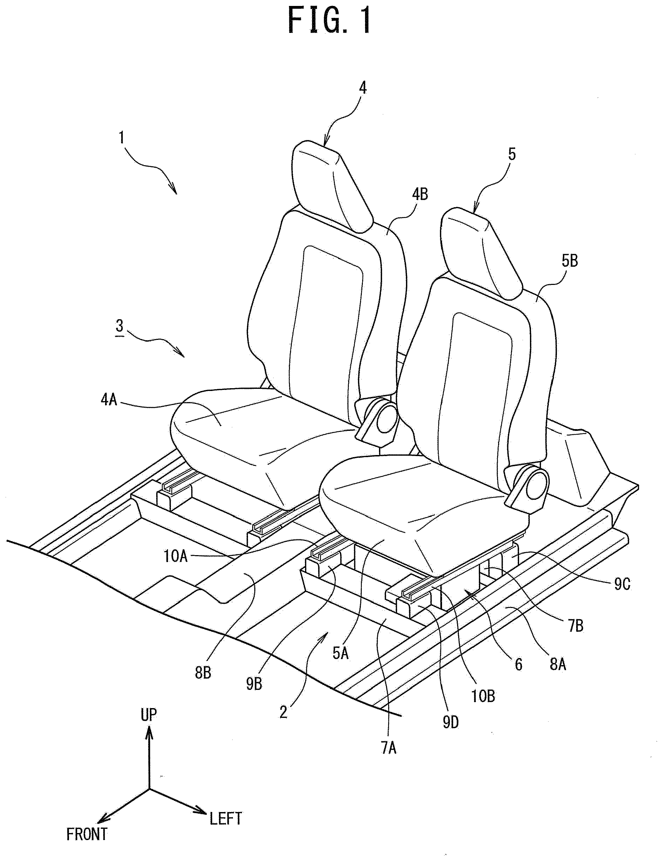

Figure 1 to Figure 8 are diagrams illustrating a mounting structure of an electric component of an embodiment according to the present invention. In Figure 1 to Figure 8, up-down, front-rear and left-right directions are based on an electric component mounted on a vehicle, and it is assumed that a front-rear direction of the vehicle is the front-rear direction, a left-right direction of the vehicle (vehicle width direction) is the left-right direction and an up-down direction of the vehicle (vehicle height direction) is the up-down direction.

First, a configuration will be described.

In Figure 1, a vehicle 1 includes a floor panel 2 and a vehicle room 3 is formed above the floor panel 2. An engine room separated from the vehicle room by a dash panel (not shown) is formed on the front side of the vehicle room 3 and a baggage compartment (not shown) is formed at the rear of the vehicle room 3.

A driver's seat 4 in which a driver is seated and an assistant driver's seat 5 in which a passenger is seated are installed on the floor panel 2, and the driver's seat 4 is separated from the assistant driver's seat 5 in a vehicle width direction.

The driver's seat 4 includes a seat cushion 4A that supports the driver's buttocks and thigh and a seat back 4B that receives and supports the driver's back. The assistant driver's seat 5 includes a seat cushion 5A that supports the passenger's buttocks and thigh, and a seat back 5B that receives and supports the passenger's back.

An electrical apparatus 6 is installed between the seat cushion 5A of the assistant driver's seat 5 and the floor panel 2.

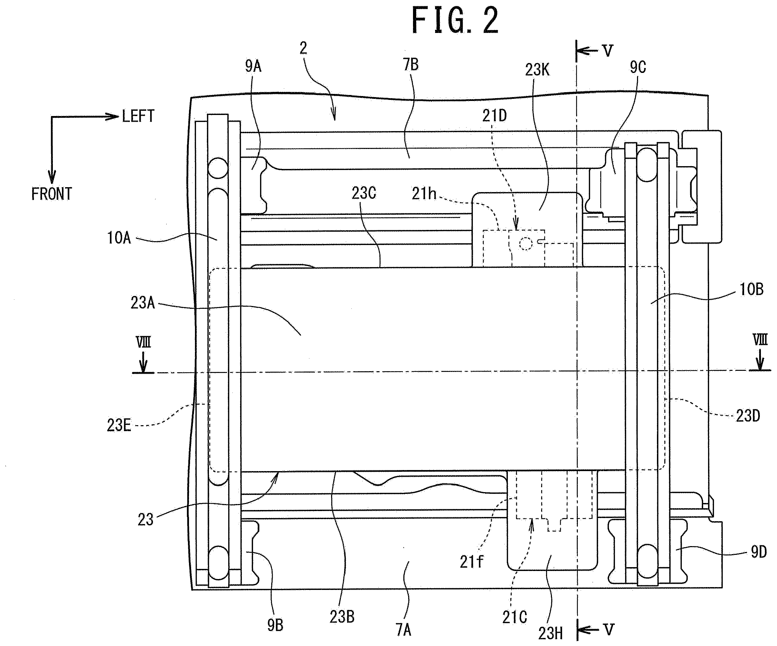

As shown in Figure 2, both a front-side cross member 7A and a rear-side cross member 7B are attached to the floor panel 2 on the assistant driver's seat 5 side, and the front-side cross member 7A and the rear-side cross member 7B are separated in the front-rear direction and extend in the vehicle width direction.

As shown in Figure 1, a left-side side sill 8A is provided at a left side end portion of the floor panel 2 and the left-side side sill 8A extends in the front-rear direction along the floor panel 2.

A floor tunnel 8B is provided in a center part of the floor panel 2 in the vehicle width direction and the floor tunnel 8B bulges upward from the floor panel 2. The floor tunnel 8B is located between the driver's seat 4 and the assistant driver's seat 5 and extends in the front-rear direction along the floor panel 2.

When the vehicle 1 is viewed from above, the electrical apparatus 6 is installed on the floor panel 2 so as to be surrounded by the front-side cross member 7A, the rear-side cross member 7B, the left-side side sill 8A and the floor tunnel 8B.

Support brackets 9A, 9B, 9C and 9D are provided at left end and right end portions of the front-side cross member 7A and the rear-side cross member 7B respectively in the vehicle width direction and the support brackets 9A, 9B, 9C and 9D protrude upward from the front-side cross member 7A and the rear-side cross member 7B.

As shown in Figure 1 and Figure 2, a slide rail 10A is provided at upper end portions of the support brackets 9A and 9B, and the slide rail 10A extends in the front-rear direction.

A slide rail 10B is provided at upper end portions of the support brackets 9C and 9D and the slide rail 10B extends in the front-rear direction parallel to the slide rail 10A. The electrical apparatus 6 is installed below the slide rails 10A and 10B.

A pair of base frames (not shown) are provided at the bottom of the seat cushion 5A of the assistant driver's seat 5 and the base frames engage with the slide rails 10A and 10B so as to be slidable with respect to the slide rails 10A and 10B in the front-rear direction.

Thus, as the base frames move with respect to the slide rails 10A and 10B in the front-rear direction, the assistant driver's seat 5 moves with respect to the floor panel 2 in the front-rear direction.

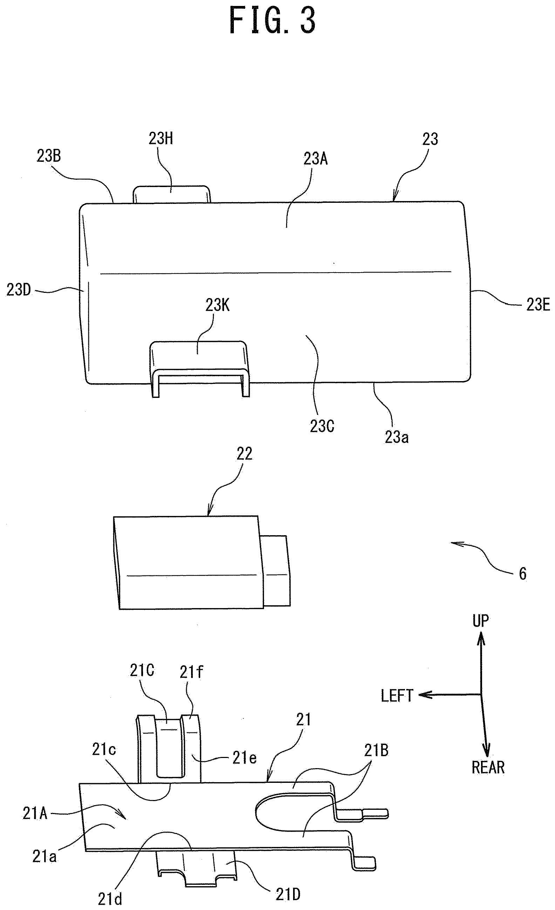

As shown in Figure 3, the electrical apparatus 6 includes a fixing bracket 21 that constitutes a fixing member, an electric component 22 and a resin cover member 23.

The fixing bracket 21 includes a placement part 21A, a bifurcated fixing portion 21B, a front-side fixing portion 21C and a rear-side fixing portion 21D.

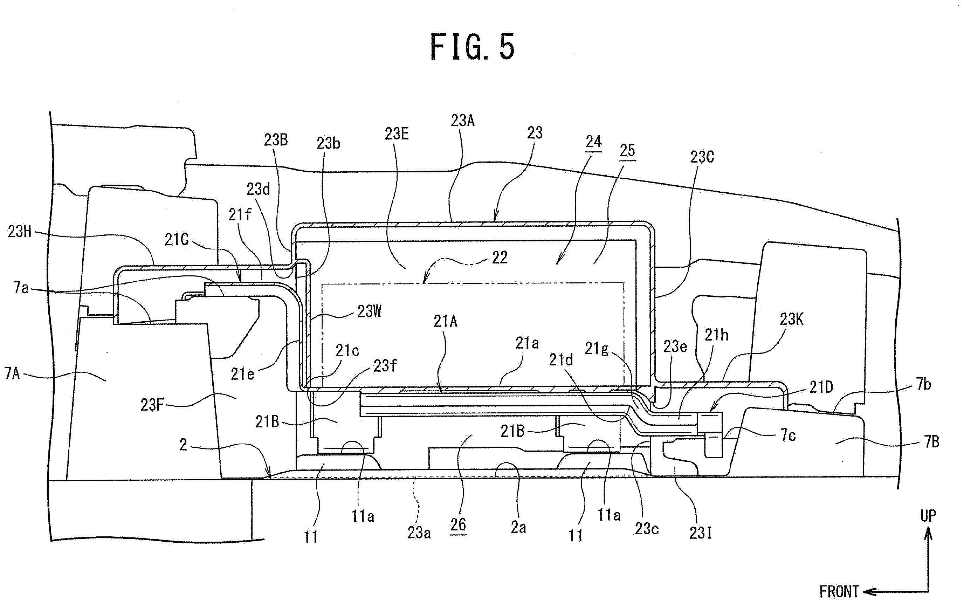

As shown in Figure 5, the placement part 21A is located at a position higher than an upper surface 2a of the floor panel 2 (that is, above the upper surface 2a of the floor panel 2) and has a placement surface 21a on an upper surface thereof. The electric component 22 is placed on the placement surface 21a and the electric component 22 is fixed to the placement part 21A by a fixture such as a screw (not shown).

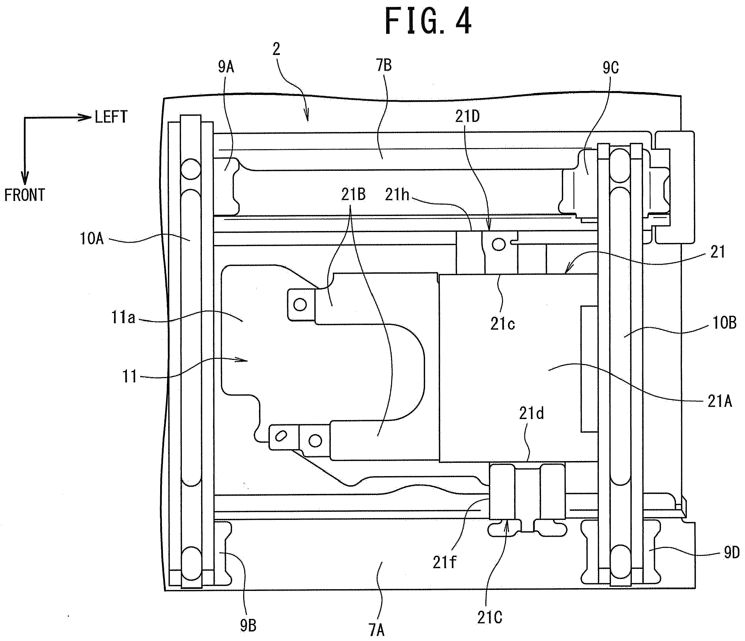

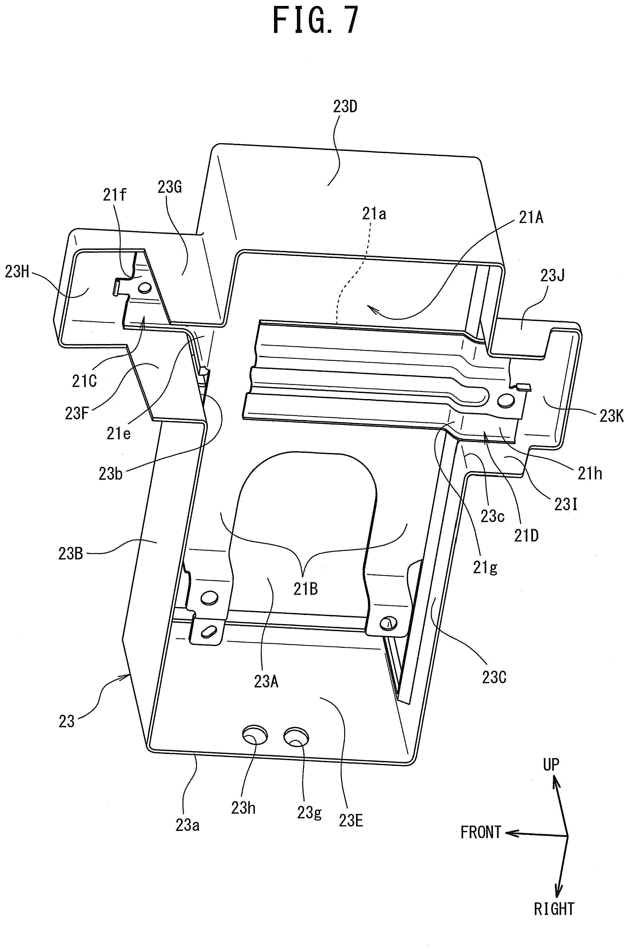

As shown in Figure 4 and Figure 7, the fixing portion 21B extends rightward linearly from the right end portion of the placement part 21A and is then bent downward.

As shown in Figure 4, when the vehicle 1 is viewed from above, a bracket 11 is provided in a space surrounded by the front-side cross member 7A, the rear-side cross member 7B and the slide rails 10A and 10B, and an upper surface 11a of the bracket 11 is located at a position higher than the upper surface 2a of the floor panel 2 and at a position lower than the placement part 21A (see Figure 5).

A bottom end portion of the fixing portion 21B is fixed to the upper surface 11a of the bracket 11 by a fixture such as a screw (not shown).

As shown in Figure 5, the front-side fixing portion 21C includes a longitudinal wall 21e that extends upward linearly from a front end portion 21c of the placement part 21A and a lateral wall 21f that extends forward linearly from the longitudinal wall 21e and the lateral wall 21f is fixed to the front-side cross member 7Aby a fixture such as a screw (not shown).

The rear-side fixing portion 21D includes a longitudinal wall 21g that extends downward from a rear end portion 21d of the placement part 21A and a lateral wall 21h that extends rearward linearly from the longitudinal wall 21g and the lateral wall 21h is fixed to the rear-side cross member 7B by a fixture such as a screw (not shown).

The front end portion 21c of the placement part 21A of the present embodiment constitutes one end portion of the placement part and the rear end portion 21d of the placement part 21A constitutes the other end portion of the placement part. The front-side cross member 7A and the rear-side cross member 7B each contain regions with different heights in the front-rear direction.

As shown in Figure 5, the front-side fixing portion 21C is fixed to an upper surface 7a of the front-side cross member 7A located at a position higher than the placement surface 21a of the placement part 21A. The rear-side fixing portion 21D is fixed to a lower portion 7c of the rear-side cross member 7B provided at a position higher than the upper surface 2a of the floor panel 2 and lower than the placement part 21A. The lower portion 7c is a region lower than an upper surface 7b of the rear-side cross member 7B.

Thus, the fixing bracket 21 is fixed to the floor panel 2 via the front-side cross member 7A, the rear-side cross member 7B and the bracket 11 such that the placement surface 21a is located at a position lower than the upper surface 7a of the front-side cross member 7A and higher than the lower portion 7c of the rear-side cross member 7B.

The fixing bracket 21 of the present embodiment constitutes a fixing member and the front-side cross member 7A, the rear-side cross member 7B and the bracket 11 constitute a fixed part.

The rear-side fixing portion 21D constitutes a first fixing portion and the front-side fixing portion 21C constitutes a second fixing portion. The rear-side cross member 7B constitutes a fixed part and a first fixed part, the lower portion 7c of the rear-side cross member 7B constitutes a first fixed region. The front-side cross member 7A constitutes a fixed part and a second fixed part and the upper surface 7a of the front-side cross member 7A constitutes a second fixed region.

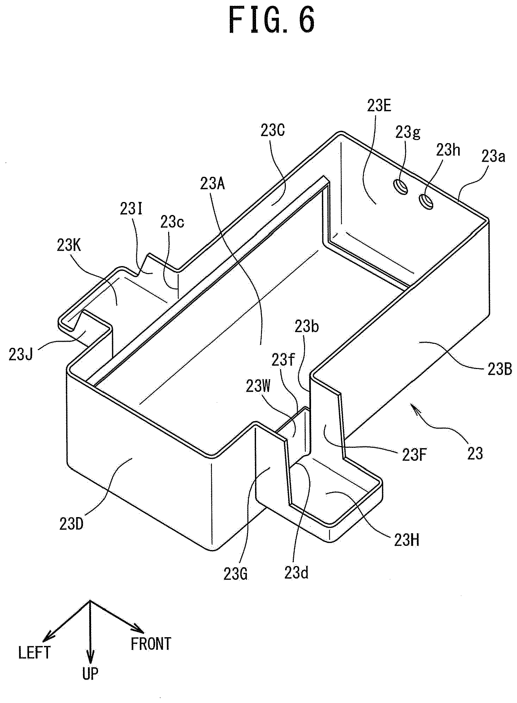

As shown in Figure 6 and Figure 7, the cover member 23 includes a ceiling wall 23A, a front wall 23B, a rear wall 23C, a left side wall 23D and a right side wall 23E.

The front wall 23B and the rear wall 23C extend downward from the ceiling wall 23A and face each other in the front-rear direction.

The left side wall 23D extends downward from the ceiling wall 23A and communicates the left end portion of the front wall 23B with the left end portion of the rear wall 23C. The right side wall 23E extends downward from the ceiling wall 23A and communicates the right end portion of the front wall 23B with the right end portion of the rear wall 23C.

The bottom of the front wall 23B, the rear wall 23C, the left side wall 23D and the right side wall 23E is open. The cover member 23 covers the fixing bracket 21 and the electric component 22 with the ceiling wall 23A, the front wall 23B, the rear wall 23C, the left side wall 23D and the right side wall 23E from above and from the side (in a front to rear direction and a left to right direction).

That is, the cover member 23 covers the fixing bracket 21 and the electric component 22 to ensure that the fixing bracket 21 and the electric component 22 are not visible from the outside.

Compared to the lengths of the front wall 23B and the rear wall 23C in the front-rear direction, the lengths of the left side wall 23D and the right side wall 23E in the vehicle width direction are shorter, and the cover member 23 is formed in a rectangular shape when viewed from above.

The lengths (heights) of the front wall 23B, the rear wall 23C, the left side wall 23D and the right side wall 23E in the up-down direction are formed identically and a bottom end portion 23a of the front wall 23B, the rear wall 23C, the left side wall 23D and the right side wall 23E is located at a position lower than the placement surface 21a of the fixing bracket 21 (see Figure 5). Hereinafter, the bottom end portion 23a of the front wall 23B, the rear wall 23C, the left side wall 23D and the right side wall 23E is also referred to as the bottom end portion 23a of the cover member 23.

The bottom end portion 23a of the cover member 23 is in contact with the upper surface 2a of the floor panel 2 and is located at the same height position as that of the upper surface 2a of the floor panel 2.

A front-side opening 23b is formed in the front wall 23B of the cover member 23 and the front-side opening 23b is cut out upward from the bottom end portion 23a of the front wall 23B. That is, the front-side opening 23b is open in the up-down direction of the front wall 23B.

A rear-side opening 23c is formed in the rear wall 23C of the cover member 23 and the rear-side opening 23c is cut out upward from the bottom end portion 23a of the rear wall 23C. That is, the rear-side opening 23c is open in the up-down direction of the rear wall 23C.

As shown in Figure 5, an upper end portion 23d of the front-side opening 23b is located above an upper end portion 23e of the rear-side opening 23c. More specifically, the upper end portion 23e of the rear-side opening 23c is located at the same height position as that of the placement surface 21a of the placement part 21A and the upper end portion 23d of the front-side opening 23b is located above the placement surface 21a of the placement part 21A and near the ceiling wall 23A.

As shown in Figure 5 and Figure 7, the lateral wall 21f of the front-side fixing portion 21C is located at a position higher than the lateral wall 21h of the rear-side fixing portion 21D and extends from the front end portion 21c of the placement part 21A through the front-side opening 23b forward (outward) from the front wall 23B.

The lateral wall 21h of the rear-side fixing portion 21D is located at a position lower than the lateral wall 21f of the front-side fixing portion 21C and extends from the rear end portion 21d of the placement part 21A through the rear-side opening 23c rearward (outward) from the rear wall 23C.

When the cover member 23 covers the fixing bracket 21 and the electric component 22 from above and from the side, the front-side fixing portion 21C and the rear-side fixing portion 21D are inserted through the front-side opening 23b and the rear-side opening 23c, and the front-side opening 23b and the rear-side opening 23c are guided downward along the front-side fixing portion 21C and the rear-side fixing portion 21D.

Since the upper end portion 23d of the front-side opening 23b is located above the upper end portion 23e of the rear-side opening 23c, the lateral wall 21f of the front-side fixing portion 21C never comes into contact with the upper end portion 23d of the front-side opening 23b and the cover member 23 is allowed to move until the bottom end portion 23a of the cover member 23 comes into contact with the floor panel 2.

As shown in Figure 6 and Figure 7, the front wall 23B is provided with protruding walls 23F, 23G and 23H. The protruding walls 23F and 23G protrude forward from left and right edges of the front-side opening 23b and face each other in the vehicle width direction.

The protruding wall 23H protrudes forward from the upper edge of the upper end portion 23d of the front-side opening 23b and covers the lateral wall 21f of the front-side fixing portion 21C from above (see Figure 2 and Figure 5).

The distal ends of the protruding walls 23F and 23G in the protruding direction are in contact with the front-side cross member 7A and the protruding wall 23H is in contact with the upper surface 7a of the front-side cross member 7A (see Figure 5).

In this way, the front-side opening 23b is closed by the protruding walls 23F, 23G and 23H and the front-side cross member 7A, and an internal space 24 of the cover member 23 (see Figure 5) is out of communication with the outside (outside air) of the cover member 23 via the front-side opening 23b.

The rear wall 23C of the cover member 23 is provided with protruding walls 23I, 23J and 23K. The protruding walls 23I and 23J protrude rearward from left and right edges of the rear-side opening 23c and face each other in the vehicle width direction.

The protruding wall 23K protrudes rearward from an upper edge of the upper end portion 23d of the rear-side opening 23c and covers a lateral wall 21h of the rear-side fixing portion 21D from above (see Figure 2 and Figure 5).

The distal ends of the protruding walls 23I and 23J in the protruding direction are in contact with the rear-side cross member 7B and the protruding wall 23K is in contact with the upper surface 7b of the rear-side cross member 7B (see Figure 5).

In this way, the rear-side opening 23c is closed by the protruding walls 23I, 23J and 23K and the rear-side cross member 7B, and the internal space 24 of the cover member 23 is out of communication with the outside (outside air) of the cover member 23 via the rear-side opening 23c.

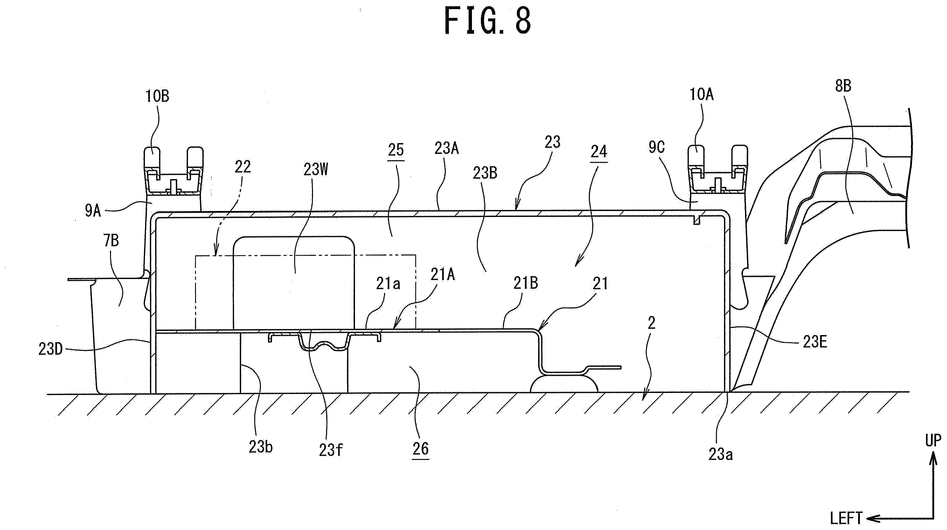

As shown in Figure 5 and Figure 6, the front wall 23B of the cover member 23 is provided with a partition wall 23W. The partition wall 23W closes an upper side portion of the front-side opening 23b (see Figure 8).

More specifically, a bottom end portion 23f of the partition wall 23W is located at the same height position as that of the placement surface 21a (see Figure 8) and an air space is formed in an upper internal space 25 of the cover member 23 above the placement surface 21a of the internal space 24 of the cover member 23. Note that the partition wall 23W may close the entire front-side opening 23b.

An air space is also formed in a lower side internal space 26 below the placement part 21A of the internal space 24 of the cover member 23.

The front wall 23B, the rear wall 23C, the left side wall 23D and the right side wall 23E of the cover member 23 of the present embodiment constitute side walls and the front wall 23B constitutes a predetermined side wall.

Engaging parts are formed on both the left and right sides of the partition wall 23W and both the left and right sides of the longitudinal wall 21e of the front-side fixing portion 21C strongly engage with the engaging parts. In this way, the cover member 23 is fixed to the fixing bracket 21.

In the cover member 23, the lateral wall 21f of the front-side fixing portion 21C engages with the front-side opening 23b and the lateral wall 21h of the rear-side fixing portion 21D engages with the rear-side opening 23c.

In the cover member 23, the distal ends of the protruding walls 23F and 23G in the protruding direction come into contact with the front-side cross member 7A and the protruding wall 23H comes into contact with the upper surface 7a of the front-side cross member 7A.

In addition, in the cover member 23, the distal ends of the protruding walls 23I and 23J in the protruding direction come into contact with the rear-side cross member 7B and the protruding wall 23K is in contact with the upper surface 7b of the rear-side cross member 7B.

Thus, the cover member 23 is stably fixed to the fixing bracket 21 without moving with respect to the floor panel 2.

As shown in Figure 6 and Figure 7, a plurality of through holes 23g and 23h for passing wire harnesses (not shown) are formed in the right side wall 23E of the cover member 23. The through holes 23g and 23h are located at positions lower than the placement surface 21a of the placement part 21A.

The wire harnesses are connected to terminals of the electric component 22, wired to the outside of the cover member 23 from the terminal of the electric component 22 through the bifurcated fixing portion 21B and the through holes 23g and 23h and connected to another electric component mounted on the vehicle 1.

The wire harnesses pass below the floor tunnel 8B and are disposed from below the driver's seat 4 to the lower side of the assistant driver's seat 5.

Note that although the through holes for passing the wire harnesses may be formed in any one of the front wall 23B, the rear wall 23C and the left side wall 23D, the through holes are preferably located at positions lower than the placement surface 21a of the placement part 21A in this case.

Next, effects of the mounting structure of the electric component 22 of the present embodiment will be described.

Since the electrical apparatus 6 of the present embodiment is installed between the seat cushion 5A of the assistant driver's seat 5 and the floor panel 2, it is possible to install the electrical apparatus 6 in the vehicle room 3 in a lower temperature environment than in the engine room and more easily extract the performance of the electric component 22.

In addition, it is possible to prevent the space of the baggage compartment from being blocked by the electrical apparatus 6, improve installation performance of the electrical apparatus 6, eliminate the need for installing the electrical apparatus 6 in the engine room and therefore reduce the size of the engine room.

When the electric apparatus 6 is installed on the upper surface 2a of the floor panel 2, the electric apparatus 6 is installed at a low position, and therefore the electric component 22 installed on the floor panel 2 may become submerged while the vehicle 1 is running or parked on a submerged road.

The mounting structure for the electric component 22 of the present embodiment is provided with the fixing bracket 21 including the placement part 21A with the placement surface 21a on which the electric component 22 is mounted, and the fixing bracket 21 is fixed to the front-side fixing part 21C, the rear-side fixing part 21D and the bracket 11 provided on the upper surface 2a of the floor panel 2 of the vehicle 1.

The mounting structure for the electric component 22 is provided with the cover member 23 including the ceiling wall 23A, and the front wall 23B, the rear wall 23C, the left side wall 23D and the right side wall 23E extending downward from the ceiling wall 23A, the cover member 23 being configured to cover the fixing bracket 21 and the electric component 22 from above and from the side.

The placement surface 21a of the fixing bracket 21 is located at a position higher than the upper surface 2a of the floor panel 2, and the bottom end portion 23a of the front wall 23B, the rear wall 23C, the left side wall 23D and the right side wall 23E in the cover member 23 is located at a position lower than the placement surface 21a.

While the vehicle 1 is running or parked on the submerged road, it is possible to form an air space in the lower internal space 26 below the placement part 21A. For this reason, it is possible to make it difficult for water to enter the lower internal space 26 and prevent the water level from rising above the placement surface 21a.

It is therefore possible to prevent the electric component 22 installed on the floor panel 2 from submerging.

Since the placement surface 21a on which the electric component 22 is mounted is separated upward from the upper surface 2a of the floor panel 2 and the electric component 22 is installed on the upper internal space 25, it is possible to prevent water from reaching the electric component 22 if the water level rises when the vehicle 1 is submerged.

In addition to this, even when water approaches the electric component 22, the air space formed in the upper internal space 25 prevents the water from reaching the electric component 22 and prevents the electric component 22 installed on the floor panel 2 from submerging.

The placement surface 21a of the placement part 21A on which the electric component 22 is mounted is installed separated upward from the upper surface 2a of the floor panel 2, and it is thereby possible to form an air space in the lower internal space 26 of the cover member 23 and thereby allow the heat of the electric component 22 to escape to the lower internal space 26. This makes it possible to improve heat discharge performance of the electric component 22 and prevent temperature rise of the electric component 22.

According to the mounting structure for the electric component 22 of the present embodiment, the cover member 23 includes the front-side cross member 7A and the rear-side cross member 7B located at positions higher than the upper surface 2a of the floor panel 2.

The front-side cross member 7A includes the upper surface 7a to which the front-side fixing part 21C is fixed and the rear-side cross member 7B includes the lower part 7c to which the rear-side fixing part 21D is fixed.

In addition to this, the placement surface 21a is installed at a position higher than the lower part 7c of the rear-side cross member 7B.

This makes it possible to install the placement surface 21a of the placement part 21A above the upper surface 2a of the floor panel 2 and install the electric component 22 in the internal space 24 in which an air space is formed when the vehicle 1 is submerged. For this reason, it is possible to more effectively prevent the electric component 22 installed on the floor panel 2 from submerging.

It is also possible to allow the heat of the electric component 22 to escape to the lower internal space 26 in which the air space is formed and improve the heat discharge performance of the electric component 22 more effectively.

According to the mounting structure of the electric component 22 of the present embodiment, the front-side opening 23b is provided on the front wall 23B of the cover member 23, and the front-side opening 23b is open in the up-down direction so that the upper end portion 23d is located above the placement surface 21a.

The rear-side cross member 7B extends rearward from the rear end portion 21d of the placement part 21A through the rear-side opening 23c behind the rear wall 23C, and the front-side cross member 7A extends from the front end portion 21c of the placement part 21A through the front-side opening 23b outward from the front wall 23B so that the lateral wall 21f is located at a position higher than the lateral wall 21h of the rear-side cross member 7B.

In addition to this, the partition wall 23W is provided on the front wall 23B and the partition wall 23W closes the upper part of the front-side opening 23b at a position higher than the placement surface 21a.

Here, when the height of the front-side fixing part 21C is larger than the height of the rear-side fixing part 21D, it is necessary to make the length of the front-side opening 23b for inserting the front-side fixing part 21C larger than the length of the rear-side opening 23c. For this reason, the internal space 24 communicates with an outside of the cover member 23 through the front-side opening 23b.

According to the mounting structure for the electric component 22 of the present embodiment, the partition wall 23W is provided on the front wall 23B and the partition wall 23W closes the upper part of the front-side opening 23b at a position higher than the placement surface 21a.

This makes it possible to prevent the upper internal space 25 above the placement surface 21a of the placement part 21A from communicating with the outside of the cover member 23 and form an air space in the upper internal space 25.

For this reason, if the water level rises when the vehicle 1 is submerged, the air space formed in the upper internal space 25 can prevent water from reaching the electric component 22 and prevent the electric component 22 installed on the floor panel 2 from submerging.

It is possible to shorten the length of the front-side opening 23b in the up-down direction at a position higher than the placement surface 21a and shorten the length of the partition wall 23W in the up-down direction as the position of the placement part 21A is made higher with respect to the floor panel 2 while securing the installation space of the electric component 22 in the upper internal space 25.

It is thereby possible to more effectively prevent the internal space 24 from communicating with the outside of the cover member 23 through the front-side opening 23b and collect more air in the upper internal space 25 when the vehicle 1 is submerged. Thus, it is possible to more effectively prevent the electric component 22 installed on the floor panel 2 from submerging.

As the position of the placement part 21A becomes higher with respect to the floor panel 2, it is possible to increase the volume of the lower internal space 26 and collect more air in the lower internal space 26 and more effectively prevent the electric component 22 installed on the floor panel 2 from submerging.

In addition to this, it is possible to allow more heat to escape from the electric component 22 to the lower internal space 26 and more effectively improve the heat discharge performance of the electric component 22.

Note that according to the mounting structure for the electric component 22 of the present embodiment, the front-side fixing part 21C is installed at a position higher than the placement surface 21a of the placement part 21A, the rear-side fixing part 21D is installed at a position lower than the placement surface 21a of the placement part 21A and the placement surface 21a is installed at a position higher than the rear-side fixing part 21D, but the present invention is not limited to this.

That is, the front-side fixing part 21C may be installed at a position lower than the placement surface 21a of the placement part 21A, the rear-side fixing part 21D may be installed at a position higher than the placement surface 21a of the placement part 21A and the placement surface 21a may be installed at a position higher than the front-side fixing part 21C.

The mounting structure for the electric component 22 of the present embodiment includes the wire harness connected to the electric component 22.

The cover member 23 contains the through holes 23g and 23h through which the wire harness is passed inside the cover member 23, and the through holes 23g and 23h are formed on the right side wall 23E so as to be located at a position lower than the placement surface 21a.

Here, if the through hole is formed above the placement surface 21a of the placement part 21A on which the electric component 22 is installed, the upper internal space 25 may communicate with the outside of the cover member 23 through the through hole.

On the contrary, since the through holes 23g and 23h are formed at positions lower than the placement surface 21a, it is possible to prevent the upper internal space 25 from communicating with the outside of the cover member 23 through the through holes 23g and 23h, and prevent a connection part between the electric component 22 and the wire harness from submerging.

If the position of the placement part 21A is made higher, it is possible to increase the installation areas of the front wall 23B, the rear wall 23C, the left side wall 23D and the right side wall 23E below the placement part 21A, increase the installation spaces of the through holes 23g and 23h and improve a degree of freedom of installation of the through holes 23g and 23h.

Note that although the fixed part of the present embodiment is constructed of the front-side cross member 7A and the rear-side cross member 7B of the floor panel 2, the fixed part may be a region integral with the floor panel 2 (integrally molded).

The electric component is applicable, for example, to a battery or a DC-DC converter. However, the electric component is not limited to a battery or a DC-DC converter, but may be applicable to any electrical component as long as it is mounted on the vehicle 1.

Further, although the electrical apparatus 6 is installed between the seat cushion 5A of the assistant driver's seat 5 and the floor panel 2, the electrical apparatus 6 may be installed between the seat cushion 4A of the driver's seat 4 and the floor panel 2.

### [Reference Signs List]

1...vehicle, 2...floor panel, 2a...upper surface (upper surface of floor panel), 7A...front-side cross member (fixed part, second fixed part), 7a...upper surface (second fixed region), 7B...rear-side cross member (fixed part, first fixed part), 7c...lower region (first fixed region), 21...fixing bracket (fixing member), 21A...placement part, 21a...placement surface, 21C...front-side fixing portion (second fixing portion), 21c...front end portion (one end portion of placement part), 21D...rear-side fixing portion (first fixing portion), 21d...rear end portion (other end portion of placement part), 22...electric component, 23...cover member, 23A...ceiling wall, 23B...front wall (side wall, predetermined side wall), 23b...front-side opening (opening), 23C...rear wall (side wall), 23D...left side wall (side wall), 23E...right side wall (side wall), 23g, 23h.. through hole, 23W...partition wall

## Claims

1. A mounting structure for an electric component, comprising:
a fixing member (21) including a placement part (21A) with a placement surface (21a) on which an electric component (22) is mounted, the fixing member (21) being fixed to a fixed part (7A, 7B) of an upper surface of a floor panel (2) of a vehicle (1); and
a cover member (23) including a ceiling wall (23A) and a plurality of side walls (23B, 23C, 23D, 23E) extending downward from the ceiling wall (23A), the cover member (23) being configured to cover the electric component (22) and the fixing member (21) from above and from a side, wherein
the placement surface (21a) is located at a position higher than an upper surface (2a) of the floor panel (2),
a bottom end portion (23a) of the plurality of side walls (23B, 23C, 23D, 23E) is located at a position lower than the placement surface (21a), **characterized in that**:
the fixing member (21) includes a first fixing part (21D) and a second fixing part (21C),
the fixed part (7A, 7B) includes a first fixed part (7B) and a second fixed part (7A) located at positions higher than the floor panel (2),
the first fixed part (7B) includes a first fixed region (7c) to which the first fixing part (21D) is fixed,
the second fixed part (7A) includes a second fixed region (7a) to which the second fixing part (21C) is fixed,
the placement surface (21a) is located at a position higher than any one of the first fixed region (7c) and the second fixed region (7a),
one predetermined side wall (23B) among the plurality of side walls (23B, 23C, 23D, 23E) of the cover member (23) is provided with an opening (23b),
the opening (23b) is open in an up-down direction such that an upper end portion (23d) of the opening (23b) is located at a position above the placement surface (21a),
any one of the first fixing part (21D) and the second fixing part (21C) extends outward from one end portion of the placement part (21A),
the other of the first fixing part (21D) and the second fixing part (21C) extends from the other end portion of the placement part (21A) to an outside of the predetermined side wall (23B) through the opening (23b) so as to be located at a position higher than any one of the first fixing part (21D) and the second fixing part (21C),
a partition wall (23W) is provided on the predetermined side wall (23B),
the partition wall (23W) closes at least part of the opening (23b),
an air space is formed in an upper internal space (25) of the cover member (23) above the placement surface (21a) of an internal space (24) of the cover member (23), and
another air space is formed in a lower internal space (26) below the placement part (21A) of the internal space (24) of the cover member (23).

2. The mounting structure for an electric component as claimed in claim 1, wherein
the mounting structure for an electric component further comprises a wire harness connected to the electric component (22),
the cover member (23) includes a through hole (23g, 23h) through which the wire harness is passed inside the cover member (23), and
the through hole (23g, 23h) is formed on at least one of the plurality of side walls (23B, 23C, 23D, 23E) so as to be located at a position lower than the placement surface (21a).

## Patentansprüche

1. Eine Montagestruktur für eine elektrische Komponente, umfassend:
ein Befestigungselement (21) mit einem Platzierungsteil (21A) mit einer Platzierungsoberfläche (21a), auf der eine elektrische Komponente (22) montiert ist, wobei das Befestigungselement (21) an einem befestigten Teil (7A,7B) einer oberen Oberfläche eines Bodenblechs (2) eines Fahrzeugs (1) befestigt ist, und
ein Abdeckelement (23), das eine Deckenwand (23A) und eine Vielzahl von Seitenwänden (23B,23C,23D,23E) enthält, die sich von der Deckenwand (23A) nach unten erstrecken, wobei das Abdeckelement (23) konfiguriert ist, um die elektrische Komponente (22) und das Befestigungselement (21) von oben und von einer Seite abzudecken, wobei
die Platzierungsoberfläche (21a) sich an einer Position befindet, die höher liegt als eine obere Oberfläche (2a) der Bodenplatte (2),
ein unterer Endabschnitt (23a) der Vielzahl von Seitenwänden (23B,23C,23D,23E) an einer Position angeordnet ist, die tiefer liegt als die Platzierungsoberfläche (21a),
**dadurch gekennzeichnet, dass**:
das Befestigungselement (21) einen ersten Befestigungsteil (21D) und einen zweiten Befestigungsteil (21C) aufweist,
das befestigte Teil (7A,7B) ein erstes befestigtes Teil (7B) und ein zweites befestigtes Teil (7A) umfasst, die sich an Positionen befinden, die höher liegen als die Bodenplatte (2),
das erste befestigte Teil (7B) einen ersten befestigten Bereich (7c) aufweist, an dem das erste Befestigungsteil (21D) befestigt ist,
der zweite befestigte Teil (7A) einen zweiten befestigten Bereich (7a) aufweist, an dem das zweite Befestigungsteil (21C) befestigt ist,
die Platzierungsoberfläche (21a) an einer Position angeordnet ist, die höher liegt als der erste befestigte Bereich (7c) oder der zweite befestigte Bereich (7a),
eine vorbestimmte Seitenwand (23B) unter der Vielzahl von Seitenwänden (23B,23C,23D,23E) des Abdeckelements (23) mit einer Öffnung (23b) versehen ist,
die Öffnung (23b) in einer Aufwärts-Abwärts-Richtung offen ist, so dass ein oberer Endabschnitt (23d) der Öffnung (23b) sich an einer Position oberhalb der Platzierungsoberfläche (21a) befindet,
irgend eines von dem ersten Befestigungsteil (21D) und dem zweiten Befestigungsteil (21C) sich von einem Endabschnitt des Platzierungsteils (21A) nach außen erstreckt,
das andere von dem ersten Befestigungsteil (21D) und dem zweiten Befestigungsteil (21C) sich von dem anderen Endabschnitt des Platzierungsteils (21A) zu einer Außenseite der vorbestimmten Seitenwand (23B) durch die Öffnung (23b) erstreckt, so dass es sich an einer Position befindet, die höher liegt als jedes von dem ersten Befestigungsteil (21D) und dem zweiten Befestigungsteil (21C),
eine Trennwand (23W) an der vorbestimmten Seitenwand (23B) vorgesehen ist,
die Trennwand (23W) zumindest einen Teil der Öffnung (23b) verschließt,
ein Luftraum in einem oberen Innenraum (25) des Abdeckelements (23) oberhalb der Platzierungsoberfläche (21a) eines Innenraums (24) des Abdeckelements (23) ausgebildet ist, und
ein anderer Luftraum in einem unteren Innenraum (26) unterhalb des Platzierungsteils (21A) des Innenraums (24) des Abdeckelements (23) ausgebildet ist.

2. Die Montagestruktur für eine elektrische Komponente nach Anspruch 1, wobei
die Montagestruktur für eine elektrische Komponente ferner einen Kabelbaum umfasst, der mit der elektrischen Komponente (22) verbunden ist,
das Abdeckelement (23) ein Durchgangsloch (23g,23h) aufweist, durch das der Kabelbaum innerhalb des Abdeckelements (23) geführt ist, und
das Durchgangsloch (23g,23h) an mindestens einer der mehreren Seitenwände (23B,23C,23D,23E) so ausgebildet ist, dass es sich an einer Position befindet, die tiefer liegt als die Platzierungsoberfläche (21a).

## Revendications

1. Structure de montage d'un composant électrique, comprenant :
un élément (21) de fixation comprenant une partie (21A) de mise en position ayant une surface (21a) de mise en position, sur laquelle un composant (22) électrique est monté, l'élément (21) de fixation étant fixé à une partie (7A, 7B) fixe d'une surface supérieure d'un panneau (2) de plancher d'un véhicule (1) ; et
un élément (23) de couverture comprenant une paroi (23A) de plafond et une pluralité de parois (23B, 23C, 23D, 23E) latérales s'étendant vers le bas, à partir de la paroi (23A) de plafond, l'élément (23) de couverture étant configuré pour recouvrir l'élément (22) électrique et l'élément (21) de fixation du dessus et d'un côté, dans lequel
la surface (21a) de mise en position est en une position plus haute qu'une surface (2a) supérieure du panneau (2) de plancher,
une partie (23a) d'extrémité de fond de la pluralité de parois (23B, 23C, 23D, 23E) latérales est en une position plus basse que la surface (21a) de mise en position, **caractérisée en ce que**
l'élément (21) de fixation comprend une première partie (21D) de fixation et une deuxième partie (21C) de fixation,
la partie (7A, 7B) fixe comprend une première partie (7B) fixe et une deuxième partie (7A) fixe en des positions plus hautes que le panneau (2) de plancher,
la première partie (7B) fixe comprend une première région (7c) fixe, sur laquelle la première partie (21D) de fixation est fixée,
la deuxième partie (7A) fixe comprend une deuxième région (7a) fixe, sur laquelle la deuxième partie (21C) de fixation est fixée,
la surface (21a) de mise en position est en une position plus haute que n'importe laquelle de la première région (7c) fixe et la deuxième région (7a) fixe,
une paroi (23B) latéral déterminée à l'avance parmi la pluralité de parois (23B, 23C, 23D, 23E) latérales de l'élément (23) de couverture est pourvue d'une ouverture (23b),
l'ouverture (23b) est ouverte dans une direction de haut en bas, de manière à ce qu'une partie (23d) d'extrémité supérieure de l'ouverture (23b) soit en une position au-dessus de la surface (21a) de mise en position,
n'importe laquelle de la première partie (21D) de fixation et de la deuxième partie (21C) de fixation s'étend vers l'extérieure, à partir d'une partie d'extrémité de la partie (21A) de mise en position,
l'autre de la première partie (21D) de fixation et de la deuxième partie (21C) de fixation s'étend de l'autre partie d'extrémité de la partie (21A) de mise en position à un extérieur de la paroi (23B) latérale déterminée à l'avance, en passant dans l'ouverture (23b), de manière à être en une position plus haute que l'une quelconque de la première partie (21D) de fixation et de la deuxième partie (21C) de fixation,
une cloison (23W) est prévue sur la paroi (23B) latérale déterminée à l'avance,
la cloison (23W) ferme au moins une partie de l'ouverture (23b),
un espace d'air est formé dans un espace (25) intérieur supérieur de l'élément (23) de couverture au-dessus de la surface (21a) de mise en position d'un espace (24) intérieur de l'élément (23) de couverture, et
un autre espace d'air est formé dans un espace (26) intérieur inférieur en-dessous de la partie (21A) de mise en position de l'espace (24) intérieur de l'élément (23) de couverture.

2. Structure de montage d'un composant électrique tel que revendiqué à la revendication 1, dans lequel
la structure de montage d'un composant électrique comprend en outre un harnais de fil connecté au composant (22) électrique,
l'élément (23) de couverture comprend un trou (23g, 23h) traversant, dans lequel le harnais de fil passe à l'intérieur de l'élément (23) de couverture, et
le trou (23g, 23h) traversant est formé sur au moins l'une de la pluralité de parois (23B, 23C, 23D, 23E) latérales, de manière à être en une position plus basse que la surface (21a) de mise en position.
